# EUROPEAN PATENT SPECIFICATION

(11) **EP 0 703 843 B1**
(45) Date of publication and mention of the grant of the patent: **05.09.2001**
(21) Application number: 94912127.1
(22) Date of filing: 29.03.1994
(51) Int. Cl.: B23B 49/00, B23Q 17/22

(54) **OPTICAL DEVICE AND METHOD FOR OBTAINING REFERENCE PLANES, ESPECIALLY FOR HAND-HELD TOOLS**
OPTISCHES GERÄT UND VERFAHREN ZUM ERZEUGEN EINER BEZUGSEBENE, INSBESONDERE FÜR HANDWERKZEUG
DISPOSITIF ET PROCEDE OPTIQUE SERVANT A OBTENIR DES PLANS DE REFERENCE POUR DES OUTILS A MAIN

(30) Priority: 30.03.1993 SE 9301058
(43) Date of publication of application: 03.04.1996
(73) Proprietor: Wiklund, Ernst Sigurd Gustaf Folke, S-120 48 Enskede Gard (SE)
(72) Inventor: Wiklund, Ernst Sigurd Gustaf Folke, S-120 48 Enskede Gard (SE)
(86) International application number: PCT/SE94/00286
(87) International publication number: WO 94/22624

(56) References cited:
- EP-A- 0 105 987
- GB-A- 1 351 048
- GB-A- 1 373 307
- US-A- 1 722 209
- US-A- 1 800 209
- US-A- 3 728 027

## Description

When using handheld drilling machines, it is very difficult to see and control the drilling direction. Thus, the result often becomes more or less slanting holes that make mounting difficult and the result ugly. Also in other cases, as erecting posts, fences and door frames, brick laying and other similar works, problems of making the construction right occur. The problems are often of the art that one, for instance when drilling, must be able to adjust the direction during ongoing operation.

The implements for direction control in use still today are mainly the same as in older times and based upon set squares, plumb-lines, levels and similar utensils. The problems and detriments that accompany those primitive methods are well known. They are useless for continuous control. They often demand helpers and do not give possibilities of control in more than one direction.

The present invention is aimed at solving the problem and concerns a new principle to observe and with security continuously control direction in more than one plane, without eye movement, by using an optical system of mutually parallel reference lines and two, slanting, reflecting, plane surfaces.

According to EP-A-105 987 light beams are used for, measuring the position of a frame-saw blade. A frame-saw is used for production of boards from timber. Thus, it is not a hand-held tool. In one embodiment of the invention mirrors attached to the saw blade are used. The only purpose of those mirrors is re-transmitting the light beams from the light sources to the measuring plane. Thus, they cannot be used for creating virtual images, where the directions of reference lines and the working direction may be compared. Such comparison is an essential part of the present invention.

US-A-1 722 209 describes an optical instrument consisting of a mirror combination. The instrument is intended for use in connection with distant objects. Uses as component in gun sights, range-finders, levelling instruments and astronomical instrument are described. In the present invention the focus is on near objects and especially the angle between a working surface and a hand-held tool. The different purposes put completely different demands on the design of measuring and control implements. An example is the orientation of the mirrors. Thus, the US-document does not give any clues useful for the solution of the problems the present invention is meant to solve.

The new method of the present invention described in more detail below does not require special lighting above the normal one and may be designed either freestanding and independent of machines used or as an easily mount- and dismountable accessory part to the machine used. It may be used not only for horizontal and vertical erections, but also for erections with arbitrary angles against the horizontal and vertical planes. The optics is simple and does not contain any optically active curved surfaces, i.e. no spherical lenses, spherical mirrors or like things. It is in principle parallax-free and has modest demands on eye position, which otherwise can be a problem at the use of optical systems.

This invention concerns a method of providing direction control for hand-held electric tools, erecting work, bricklaying and similar operations, where direction control in more than one plane is required. The method comprises:
establishing one or more with the intended direction parallel reference lines (7,8),
letting at least two slanting, plane, reflecting surfaces (3,4) with base lines forming an angle to each other make images (9,10) of the reference lines and images (12,13) of the object, the direction of which is to be controlled, and
making the direction of the images of the reference lines and the object,
the direction of which is to be controlled, coincide.

The invention also concerns a device for providing direction control to hand-held electric tools, erecting work, bricklaying and similar operations, where direction control in more than one plane is required, comprising:
means for establishing one or more with the intended direction parallel reference lines (7,8),
a device comprising at least two slanting, plane, reflecting surfaces (3,4) with base lines forming an angle to each other to get images (9,10) of the reference lines and images (12,13) of the object, the direction of which is
to be controlled, and,
if wanted, elements (14) that eliminate disturbing visual impressions from
the background.

Usually one wishes to control direction in more than one plane. For this is needed at least two, plane, reflecting surfaces. To make it possible to see, simultaneously, the images in more than one reflecting surface the surfaces have to form angles with each other. Further, if one wishes to be able to see the images from an eye position close behind, for instance, a drilling machine, the reflecting surfaces have to be slanting. The greatest precision is obtained if the angle between the base lines of the reflecting surfaces is right or nearly right, but other shapes may be used if they, from design or product technical reasons, bring advantages that surpass the comparatively small loss of precision.

Fig. 1 and 2 show the principles of a device according to the invention.

Fig. 3 is a sketch of the essential features of a preferred example of the invention.

Fig. 4 is an especially preferred design, where the implement has been designed with a corner piece (16) and provided with a backing band to eliminate visual disturbances from the environment.

Fig. 5 is an alternative design, which may be better from the manufacturing point of view, but less preferred, if the main aim is highest possible precision.

Fig. 6 shows a preferred design that makes control at oblique direction possible.

Fig. 7 shows a design of the implement according to fig. 6 intended for mounting at a hand held drilling machine.

The example of the invention shown in fig.3 can be described as two units (1) and (2) coupled, or able to be coupled, to each other at right angle. The implement is placed on or attached to the actual surface with the working point approximately symmetric between (1) and (2).

The essential elements of the units (1) and (2) consist of two transparent screens (5) and (6) equipped with mutually parallel reference lines (7 and 8) at right angle against the long sides of the screens. The screens are arranged perpendicularly against the base plane of the implement. Further, two against the base plane slanting (30 - 60°, preferably 45 - 50° angle) reflecting surfaces (3) and (4) are included.

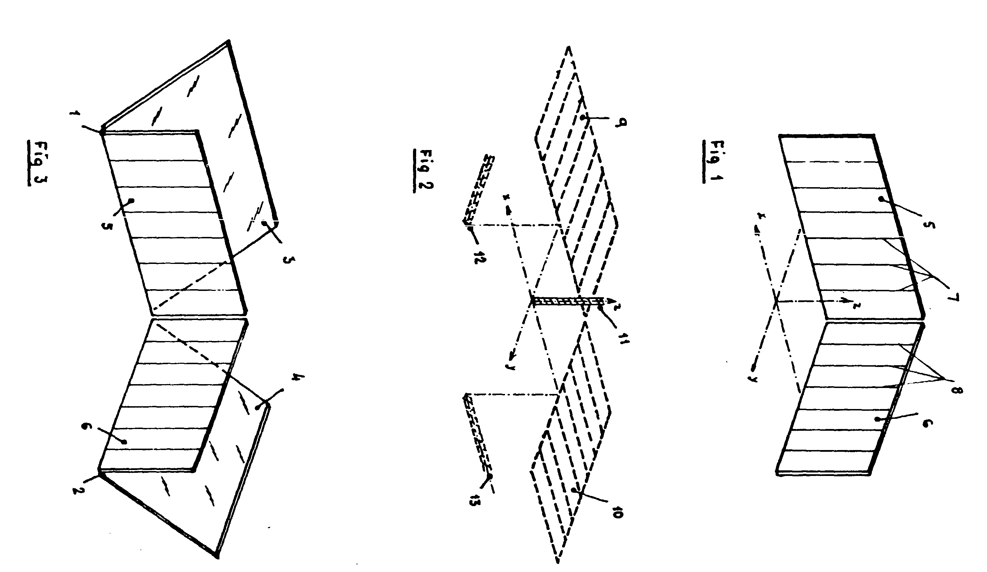

To make explanation easier fig 1 and 2 include an orthogonal co-ordinate system with the origin at the working point and the axes x, y and z, where the x- end y-axes lay in and define the base plane and the z-axis represents the intended direction. Fig. 2 has for purposes of visibility a drill (11). When the righting up is finished, the drill direction coincides with the z-axis. By comparison with fig. 1 one can see that in this situation the drill direction is correct, when an eye, placed behind or in front of the transparent screen (5) and observing the reference lines (7) and the drill (11), sees the direction of the drill as parallel to the reference lines. The angle between the x-axis and the drill is then correct, while information about the angle between the y-axis and the drill is missing. This information is obtained by the same procedure with respect to the screen (6) and the reference lines (8). To enable an operator to get simultaneous information about the correctness of the angle between the x-axis and the drill respectively the y-axis and the drill a system is needed that creates images of the drill and the reference lines and makes it possible to look at those images simultaneously. Fig. 2 shows such images created by a system of slanting, plane mirrors, giving virtual images [9,10) of the reference lines (7,8) in the base plane and virtual images (12,13) of the drill in a plane below the base plane.

As already mentioned the control implement according to the invention may be used for straightening up even at oblique angles to the working plane. This may be done by using a non-orthogonal co-ordinate system, i.e. slanting the reference lines in one or both planes. A more preferred way is to use an orthogonal co-ordinate system, i.e. let the reference lines be perpendicular to the x/y-plane and adjust the angle between it and the working surface.

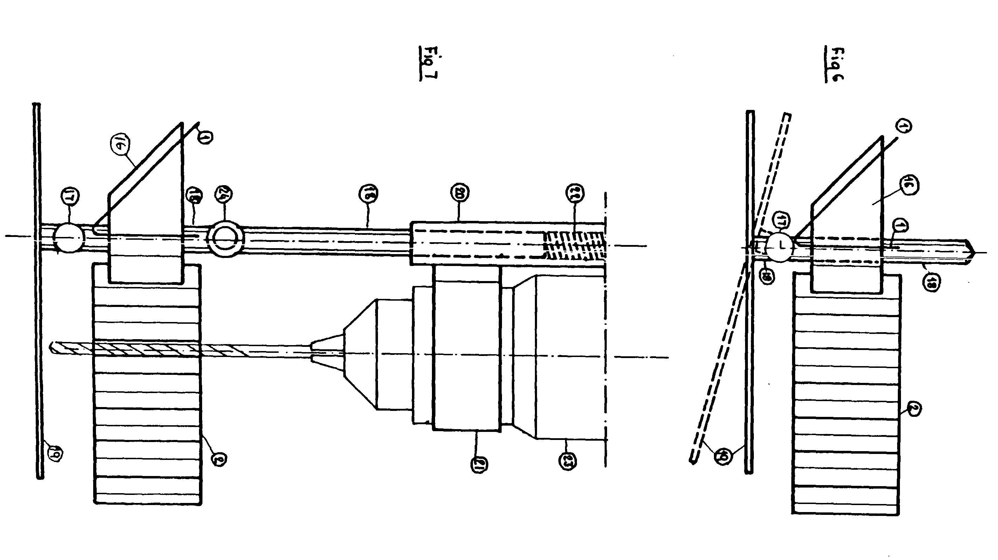

A preferred design for straightening up at an oblique angle to the working plane is shown in fig. 6, where (16) is a corner piece that, with the aid of a post (18), is joined to a foot (19). Between the foot-plate (19) and the corner piece (16) there is a knee joint (17). The knee joint (17) can be adjusted to and locked into desired position. For reasons of visibility the figure shows a hinge plane parallel to the y/z-plane. Generally a positioning at a plane situated between the y/z- and x/z-planes, for instance a plane through the bisector, might be preferred. By the appropriate design of the post (18) and the corner piece (16), for instance an octagonal post and the corresponding passage, the hinge plane can be adapted easily to, for each application, appropriate place. Occasionally there may be need for increasing respectively decreasing the height of the post between the joint and the corner piece. An appropriate way of doing this is to let the post pass the corner piece and equip the unit with suitable arrangements for fixing at desired levels.

In the design according to fig. 7 the post (18) has been elongated and equipped with a guide (20) that via a cuff (21) has been fastened to the neck of the drilling machine (23). The guide keeps the post parallel to the axis of the drilling machine. Inside the guide the post is easily movable in axial direction. The upper end of the post is loaded by a spring (22). Between the guide (20) and the corner piece (16) the post (18) is provided with an easily movable ball joint (24). The extent of the ball joint's movements is normally in a sphere segment area of about 30°. The ball joint causes the whole foot-plate to contact the ground surface, when the operator presses the machine against it. With the aid of the mirrors the operator can easily adjust any misdirection of the machine. The arrangement may be designed so that it is showing drilling depth, thus, replacing the depth indicators that are common at modern drilling machines. The holder, fixing the guide, may be designed with a handle that gives a two-hand grip to the drilling machine.

The number of reference lines may be limited to just one. For the straightening up of posts, brick laying etc. this reference line may be a hanging plumb line and be part of a preferred way of carrying out the invention.

At drilling etc. the use of just one reference line puts big demands upon the orientation of the implement. A comparatively large number of reference lines, distributed in two planes that form right or nearly right angle to each other, is preferred. The mutual distance and the length of the reference lines are adapted to the dimensions of the controlled object. The length of the planes is adapted to the need of free working space between the working point and the control implement.

The reference lines may be etched or in other ways made lines on transparent plates, but also of, for instance, a system with sticks designed as a comb. For vertical straightening ups an interesting alternative may be a system of plumb lines or freely suspended bars. Many other possibilities, besides the mentioned ones, would be obvious to a man of the art.

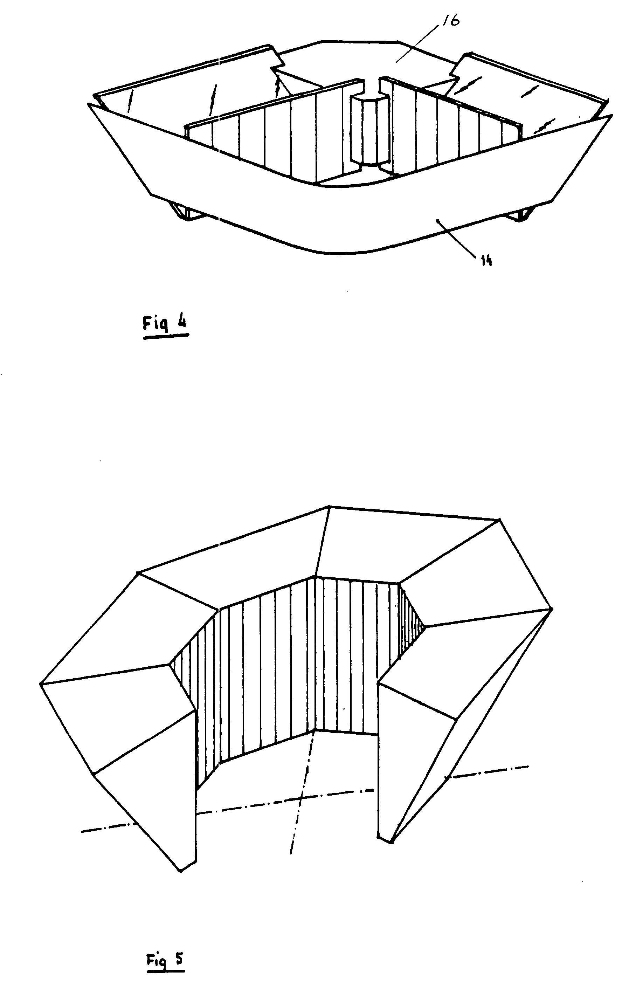

Especially preferred designs include, beside reference line system and image producing means, a back shield to eliminate disturbing visual impressions from the environment that may often be very unruly. Such a shield is shown in fig. 4, where the back shield is an easily flexible band (14) of metal or plastic with anchoring points at the ends of the units (1,2). Many other possibilities would-be obvious to a man of the art.

As the illumination conditions may be bad, at places where the implement is used, the design should be done so that the reference lines and, by means of this, the reference line images get good contrast with the background. This may be done among other ways by the choice of colour. Concerning transparent plates with etched or in other ways made lines the same effect may be obtained by giving the material different translucent properties.

A preferred device of the invention, meant for drilling, consists of two, to each other angled, planes with reference lines and two, to the reference line planes joined, oblique, reflecting surfaces. A device for sawing, with for instance an electrically driven circle saw, may be constituted of the mentioned components and beside that a reflecting surface applied at the saw blade.

The implement can be made of many different materials. Concerning smaller units meant for instance for drilling, production by the casting of plastic of optical quality is an interesting alternative. At doing this one can, by appropriate choice of angles to get total reflection, avoid the need of special preparation to make reflecting surfaces.

At plastic casting increasing the number of planes may be preferable so that one obtains a horse shoe shaped design with more than two reference line planes.

If a design according to fig. 3 is chosen the units (1,2) can be made foldable. This is to reduce the need for space at storing between uses. The collapsibility may be got in several different ways. A simple, preferred way is to make the units jointed to each other by appropriate design of the combining piece.

## Claims

1. Method of providing direction control for hand-held electric tools, erecting work, bricklaying and similar operations where direction control in more than one plane is required ***characterised in***
establishing one or more with the intended direction parallel reference lines (7,8),
letting at least two slanting, plane, reflecting surfaces (3,4), with base lines forming an angle to each other, make images (9,10) of the reference lines and images (12,13) of the object, the direction of which is to be controlled, and
making the direction of the images of the reference lines and the object, the direction of which is to be controlled, coincide.

2. The method of claim 1 ***characterised in* that** the base lines of the reflecting surfaces (15,16) form right or nearly right angle to each other.

3. A device for providing direction control to hand-held electric tools, erecting work, bricklaying and similar operations, where direction control in more than one plane is required, ***characterised in*** comprising
means for establishing one or more with the intended direction parallel reference lines (7,8),
a device comprising at least two slanting, plane, reflecting surfaces (3,4) with base lines forming an angle to each other to get images (9,10) of the reference lines and images (12,13) of the object the direction of which is to be controlled and
if wanted, elements (14) that eliminate disturbing visual impressions from the background.

4. The device of claim 3 ***characterised in* that** the base lines of the mirrors (14,15) form right or nearly right angle.

5. The device of claims 3 to 4 ***characterised in* that** the reference lines (7,8) are produced with the aid of transparent screens (5,6) with etched or in other ways made parallel lines.

6. The device of claims 3 to 5 ***characterised in* that** it can be used for straightening up at oblique direction and has been designed with a foot (19), a knee joint (17) and a post (18).

7. The device of claim 6 **characterised in that** it can be attached to a hand-held (23) drilling machine and has been designed with a holder (21), a spring loaded steering (20) for the post (18), and a ball joint (24).

8. The device of claims 3 to 4 ***characterised in* that** the reference lines (7,8) are produced by plumb-lines, suspended bars or bars or strings arranged in frames to a lattice or comb like structure.

## Patentansprüche

1. Verfahren für die Etablierung von Richtungskontrolle für elektrische Handgeräte, Aufrichtungsarbeiten, Mauerung und ähnliche Arbeiten wo Richtungskontrolle in mehr als einer Ebene notwendig ist, dadurch gekennzeichnet, dass man
eine oder mehrere Referenzlinien (7,8), die mit der bestimmten Richtung parallel sind, herstellt,
bewirkt, dass wenigstens zwei schiefe, ebene, reflektierende Flächen (3,4), mit Baslinien, die einen Winkel zu einander bilden, Spiegelbilder (9,10) der Referenzlinien und Spiegelbilder (12,13) des Gegenstandes, deren Richtung kontrolliert ist, machen, und
macht, dass die Richtung der Spiegelbilder der Referenzlinien und des Gegenstandes, deren Richtung kontrolliert ist, zusammenfallen.

2. Das Verfahren des Anspruchs 1 dadurch gekennzeichnet, dass die Baslinien (15,16) der reflektierenden Flächen rechte oder beinahe rechte Winkel zu einander bilden.

3. Eine Vorrichtung für die Etablierung von Richtungskontrolle für elektrische Handgeräte, Aufrichtungsarbeiten, Mauerung und ähnliche Arbeiten wo Richtungskontrolle in mehr als einer Ebene notwendig ist, dadurch gekennzeichnet, dass es
Mittel für das Herstellen von einer oder mehrerer Referenzlinien (7,8), die mit der bestimmten Richtung parallel sind,
eine Anordnung, die wenigstens zwei schiefe, ebene, reflektierende Flächen (3,4), mit Baslinien, die einen Winkel zu einander bilden, und Spiegelbilder (9,10) der Referenzlinien und Spiegelbilder (12,13) des Gegenstandes, deren Richtung kontrolliert ist, herstellen kann, und
gegebenenfalls, Anordnungen (14) die störende visuelle Eindrucke vom Hintergrund eliminieren,
umfasst.

4. Die Anordnung des Anspruchs 3 dadurch gekennzeichnet, dass die the Baslinien (15,16) der reflektierenden Flächen rechte oder beinahe rechte Winkel zu einander bilden.

5. Die Anordnung der Ansprüche 3 bis 4 dadurch gekennzeichnet, dass die Referenzlinien (7,8), mit Hilfe von transparenten Schirmen (5,6) mit eingeätzten oder mit anderen Methoden gemachten Parallellinien, hergestellt sind.

6. Die Anordnung der Ansprüche 3 bis 5 dadurch gekennzeichnet, dass sie für das Aufrichten bei schiefer Richtung benutzt werden kann, und mit einem Fuss (19), einem Kniegelenk (17) und einer Säule (18) ausgerüstet ist.

7. Die Anordnung des Anspruchs 6 dadurch gekennzeichnet, dass sie zu einer elektrische Handbohrmaschine (23) angeschlossen werden kann und mit einem Halter (21), einer federbelasteten Steuerung (20) für die Säule (18), und einem Kugelgelenk (24) ausgerüstet ist.

8. Die Anordnung der Ansprüche 3 bis 4 dadurch gekennzeichnet, dass die Referenzlinien (7,8), mit Lotleinen, aufgehängten Latten oder Latten oder Leinen, die in Rahmen arrangiert sind, um eine gitter- oder kammähnliche Struktur zu bilden, hergestellt werden.

## Revendications

1. Méthode pour fournir contrôle directionnel pour des outils électriques à main, le travail de montage, de maçonnerie et opérations similaires où contrôle directionnel est exigé dans plus d'un plan, se ***caractérisée en*** :
établissant une ou plus lignes de référence (7,8) parallèles à la direction voulu,
laissant au moins deux surfaces (3,4) réfléchissantes, plan et inclinées, avec des lignes de base formant un angle entre elles, renvoyer des images (9,10) des lignes de référence et des images (12,13) de l'objet, dont la direction doit être contrôlée, et
faisant coïncider la directions des images des lignes de référence et de l'objet, dont la direction doit être contrôlée.

2. La méthode de la revendication 1 ***caractérisée*** par le fait que les lignes de base des surfaces réfléchissantes (15,16) forment entre elles un angle droit ou presque droit.

3. Un dispositif de contrôle directionnel d'outils électriques à main, du travail de montage, de maçonnerie et opérations similaires où le contrôle directionnel est exigé pour plus d'un plan, se ***caractérisé en*** comprenant:
des moyens pour établir une ou plusieurs lignes de référence (7,8) parallèles à la direction voulu,
un dispositif comprenant au moins deux surfaces (3,4) réfléchissantes, planes et inclinées avec des lignes de base formant un angle entre elles, pour obtenir des images (9,10) des lignes de référence et des images (12,13) de l'objet, dont la direction doit être contrôlée, et
si on le souhaite, des éléments (14) qui éliminent les effets visuels genants de l'arrière-plan.

4. Le dispositif de la revendication 3 ***caractérisé en* ce que** les lignes de base des miroirs (15,16) forment un angle droit ou presque droit entre elles.

5. Le dispositif des revendications 3 et 4 ***caractérisé en* ce que** les lignes de référence (7,8) sont produites à l'aide d'écrans transparents (5,6) avec des lignes parallèles gravées ou produites autrement.

6. Le dispositif des revendications 3 à 5 ***caractérisé en* ce qu**'il peut être utilisé pour redressement à direction oblique et a été concu avec un pied (19), une genouillère (17) et un montant (18).

7. Le dispositif des revendications 3 à 5 ***caractérisé en* ce qu**'il peut être fixé sur une perceuse (23) à main et a éte concu avec une poignée (21), une commande à ressort (20) pour le montant (18), et une articulation à billes (24).

8. Le dispositif des revendications 3 et 4 ***caractérisé en* ce que** les lignes de référence (7,8) sont réaliser à l'aide des fils à plomb, des barres suspendues ou des barres ou de cordes disposée en une structure ressemblant à un peigne ou a un grillage.
